**Europäisches Patentamt**

**European Patent Office**

**Office européen des brevets**

(11) Veröffentlichungsnummer: **0 125 676**
**B1**

(12) # EUROPÄISCHE PATENTSCHRIFT

(45) Veröffentlichungstag der Patentschrift:
**26.10.88**

(51) Int. Cl.⁴: **B 60 C 27/06**

(21) Anmeldenummer: **84105422.4**

(22) Anmeldetag: **13.05.84**

(54) **Gleitschutzvorrichtung für Fahrzeugreifen.**

(30) Priorität: **17.05.83 AT 1810/83**

(43) Veröffentlichungstag der Anmeldung:
**21.11.84 Patentblatt 84/47**

(45) Bekanntmachung des Hinweises auf die Patenterteilung:
**26.10.88 Patentblatt 88/43**

(84) Benannte Vertragsstaaten:
**CH DE FR IT LI SE**

(56) Entgegenhaltungen:
**DE - A - 2 924 624**
**US - A - 1 434 111**
**US - A - 2 537 392**
**US - A - 3 042 097**

(73) Patentinhaber: **Schmidt, Hermann, Hardacker 3,**
**A-6850 Dornbirn (AT)**

(72) Erfinder: **Schmidt, Hermann, Hardacker 3,**
**A-6850 Dornbirn (AT)**

(74) Vertreter: **Hefel, Herbert, Dipl.-Ing., Egelseestrasse 65a**
**Postfach 61, A-6800 Feldkirch (AT)**

**Beschreibung**

Die Erfindung betrifft eine Gleitschutzvorrichtung für Fahrzeugreifen mit zwei mit Abstand annähernd parallel zueinander verlaufenden, jeweils an den Reifenseitenwänden anliegenden Längsteilen aus Ketten, Seilen, Bügeln od. dgl. und mehreren mit Abstand aufeinanderfolgenden, die Laufflächen des Reifens überspannenden Querteilen, insbesondere Querketten, deren Enden an den beiden Längsteilen befestigt sind, sowie mit Verbindungteilen zur Fixierung bzw. Verspannung der Gleitschutzvorrichtung auf dem Fahrzeugreifen. Eine solche Gleitschutzvorrichtung ist aus der US-A-2 537 392 bekannt.

Es gibt verschiedene Ausführungsvarianten von Gleitschutzvorrichtungen, und hier insbesondere eine Vielzahl von verschiedenen Schneeketten. Es können dabei an sich zwei Arten unterschieden werden, und zwar einerseits diejenigen Schneeketten, bei welchen sowohl der in bestimmungsgemässer Lage an einem Fahrzeugreifen hintere Längsteil als auch der vordere Längsteil für sich eingehängt werden müssen, worauf dann ein Verspannen an der Vorderseite des Fahrzeugreifens erfolgen kann. Die Schwierigkeiten liegen bei dieser Ausführung darin, dass mit dem Fahrzeug auf jeden Fall bei einer Kettenmontage ein Stück vor oder zurückgefahren werden muss und dass zudem über den Fahrzeugreifen nach hinten eingegriffen werden muss, um den Verschluss des hinteren Längsteiles zu schliessen.

Bei einer bekannten Gleitschutzvorrichtung sind ein hinterer, offener Kettenteil und ein vorderer, geschlossener Kettenteil vorgesehen, wobei der hintere Kettenteil aus in radialer Richtung biegesteifen, gelenkig miteinander verbundenen Ringsegmentgliedern besteht. An den freien Enden des hinteren Kettenteiles sind Verbindungsketten befestigt, welche am vorderen geschlossenen Kettenteil eingehängt werden können. Es ist ein Festlegen der Kette erforderlich durch Spannen des vorderen Kettenteils, der aus diesem Grund umfangsgeschlossen sein muss. Weiters ist die Anordnung einer Spannkette oder eines Spannseiles erforderlich, welche bzw. welches annähernd parallel zum vorderen Kettenteil geführt wird und mit einem Spannverschluss versehen ist. Um einen ordnungsgemässen Sitz der Gleitschutzvorrichtung zu erreichen, ist auf jeden Fall der vordere Kettenteil umfangsgeschlossen auszuführen und es ist eine zusätzliche Spannkette vorzusehen.

Bei Schneeketten neuerer Ausführung ist insofern bereits eine Verbesserung eingetreten, als diese am stehenden Fahrzeug montiert werden können, ohne dass ein Vor- oder Zurückbewegen des Fahrzeugreifens erforderlich ist. Diese Ausführungen sind in der Regel relativ kompliziert im Aufbau und daher auch teuer in der Anschaffung.

Die vorliegende Erfindung hat sich zur Aufgabe gestellt, eine Gleitschutzvorrichtung zum Aufbringen auf Fahrzeugreifen zu schaffen, welche einfach im konstruktiven Aufbau und zudem auch einfach in der Montage ist.

Erfindungsgemäss gelingt dies dadurch, dass beide Längsteile, wie an sich bekannt, von annähernd bogen- oder U-förmigen Ketten-, Seil-, Bügelabschnitten od. dgl. mit freiliegenden Enden gebildet sind, und dass zumindest einer der beiden Längsteile in an sich bekannter Weise an seinen freien Enden Verlängerungen aufweist, und dass das freie Ende dieser Verlängerungen in das jeweils abgewandte freie Ende des annähernd parallel dazu verlaufenden bogen- oder U-förmigen Längsteiles einhängbar ist.

Durch diese erfindungsgemässen Massnahmen kann die Gleitschutzvorrichtung in einfacher Weise von oben her auf einen Fahrzeugreifen aufgesetzt werden, wobei ein gegenseitiges Verspannen des hinteren und vorderen Längsteiles erfolgt, da durch die Verlängerungen jeweils das eine Ende des hinteren Längsteiles mit dem abgewandten Ende des vorderen Längsteiles verbunden werden kann. Die Verlängerungen werden dadurch jeweils über die Lauffläche des Fahrzeugreifens geführt und bilden somit eine zusätzliche Ergänzung zu den sonst an der Gleitschutzvorrichtung vorhandenen Querteilen.

Da diese Verlängerungen relativ leicht nach dem Aufsetzen der Gleitschutzvorrichtung von Hand erreicht werden können, besteht keine Notwendigkeit, das Fahrzeug vor- oder zurückzubewegen, da die Montage der Gleitschutzvorrichtung zur Gänze bei stehendem Fahrzeugreifen vorgenommen werden kann.

Nach der vorliegenden Erfindung bilden weder der hintere noch der vordere Längsteil der Gleitschutzvorrichtung einen durchgehenden Ring auf ihrer Seite, sondern der vordere Längsteil und der hintere Längsteil bilden zusammen mit den eingehängten Verlängerungen ein in sich geschlossenes Spannelement, das annähernd in einer Achterform verläuft. Man könnte sich also vorstellen, dass im Bereich des Kreuzungspunktes der Verlängerungen diese Achterform geknickt wäre, so dass die beiden Öffnungen des Achters annähernd mit Abstand parallel zueinander zu liegen kommen. Es ist also jeweils von den einander entgegengesetzten freien Enden der Längsteile eine Verbindung über die Verlängerung gegeben, wobei jedoch zwischen den freien Enden jeweils des vorderen oder des hinteren Längsteiles eine zusätzliche Verbindung weder vorgesehen noch erforderlich ist.

Bei der erfindungsgemässen Ausgestaltung ist weder ein Nachspannen notwendig, noch überhaupt die Anordnung einer sonst üblichen, umfangsgeschlossenen Spannkette im Bereich des vorderen Längsteiles.

Weitere erfindungsgemässe Merkmale und besondere Vorteile werden in der nachstehenden Beschreibung anhand der Zeichnung noch näher erläutert. Es zeigen:

Fig. 1 einen Fahrzeugreifen in Vorderansicht mit montierter Gleitschutzvorrichtung;

die Fig. 2 bis 7 den Montageablauf der Gleitschutzvorrichtung nach Fig. 1;

Fig. 8 eine weitere Gleitschutzvorrichtung in montiertem Zustand und die

Fig. 9 bis 15 den Montageablauf derselben.

Die Gleitschutzvorrichtung besteht aus zwei bei auf den Reifen angelegter Gleitschutzvorrichtung annähernd parallel zueinander verlaufenden Längsteilen 1 und 2 und mit Abstand aufeinanderfolgenden, die Lauffläche des Reifens überspannenden Querteilen 3, die mit ihren Enden an den beiden Längsteilen 1 und 2 befestigt sind. Zur Fixierung bzw. Verspannung der Gleitschutzvorrichtung sind Haken 4 vorgesehen, wobei diesbezüglich noch eine nähere Erläuterung folgt.

Die Längsteile 1 und 2 können aus Ketten, Seilen oder Bügeln, gebildet sein, ebenso die Querteile 3. Beim gezeigten Ausführungsbeispiel ist der hintere Längsteil 2 als annähernd U-förmiger Bügel ausgebildet und der vordere Längsteil 1 besteht aus einer Kette. Die Anordnung eines Bügels als hinteres Längsteil 2 ist insofern von Vorteil, als dadurch das Montieren der Gleitschutzvorrichtung vereinfacht wird. Bezüglich der Querteile 3 ist in der Zeichnung lediglich ein geradliniges Kettenteil dargestellt. Es können für diese Querteile alle bekannten Ausführungsvarianten eingesetzt werden, also beispielsweise auch sich kreuzende Querteilelemente oder auch in Draufsicht zick-zack-förmig verlaufende Querteile usw.

Gemäss der vorliegenden Erfindung ist nun vorgesehen, dass der hintere Längsteil 2 Verlängerungen 5, z.B. in Form von Ketten oder Seilen aufweist und das freie Ende dieser Verlängerungen 5 an dem jeweils abgewandten Ende des annähernd parallel dazu verlaufenden vorderen Längsteiles 1 einhängbar ist. Es wird also eine gegenseitige Verspannung des vorderen und hinteren Längsteiles 1 und 2 erreicht, indem praktisch ihre verlängerten Enden gegenseitig verbunden werden. Am freien Ende dieser Verlängerungen 5 sind Haken 4 vorgesehen, welche in die Kettenglieder des vorderen Längsteiles 1 eingehängt werden können.

Es besteht die Möglichkeit, nur an dem bei auf den Reifen aufgelegter Gleitschutzvorrichtung hinteren Längsteiles 2 solche Verlängerungen 5 vorzusehen. Beim gezeigten Ausführungsbeispiel sind zusätzlich auch an dem vorderen Längsteil 1 Verlängerungen 6 angeordnet, wobei jedoch die am hinteren Längsteil 2 angeordneten Verlängerungen 5 wesentlich länger ausgeführt sind als die Verlängerungen 6 am vorderen Längsteil 1. Dies ist deshalb von besonderem Vorteil, weil ja dadurch das Einhängen an der Vorderseite des Fahrzeugreifens erfolgen kann. Es wäre auch eine umgekehrte Anordnung möglich, doch ist dies in bezug auf eine einfache Montage unzweckmässig.

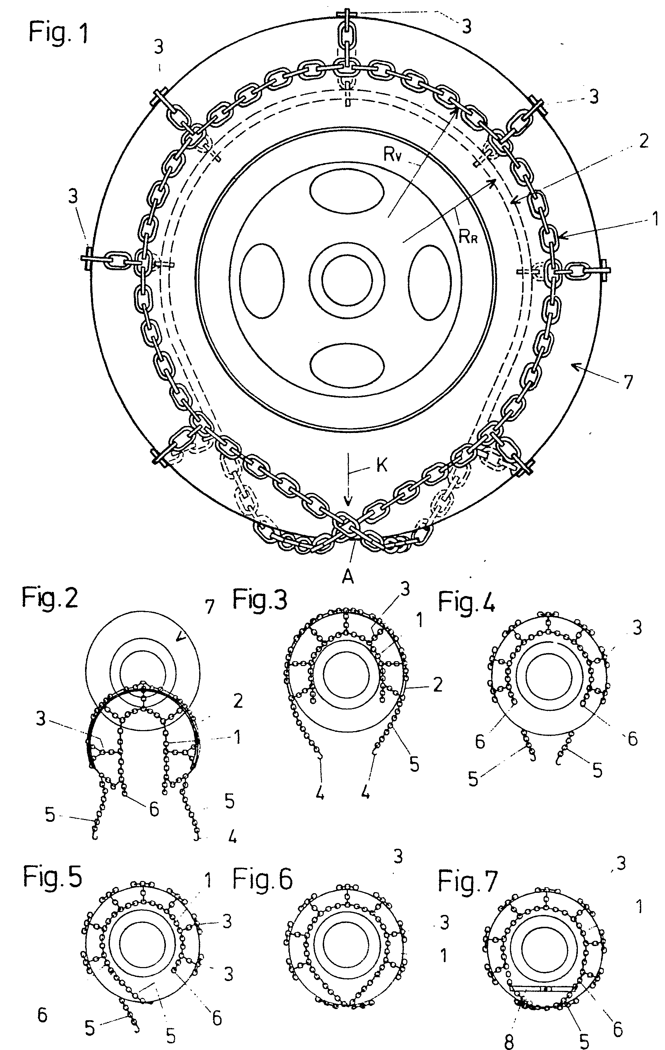

Eine weitere besondere zweckmässige Massnahme liegt darin, dass der vordere Längsteil 1 und der hintere Längsteil 2 bei auf den Reifen 7 aufgelegter Gleitschutzvorrichtung einen unterschiedlich grossen Radius aufweisen. Dabei ist beim Beispiel nach den Fig. 1 bis 7 der Radius $R_V$ des vorderen, annähernd bogenförmig verlaufenden Längsteiles 1 grösser als der Radius $R_R$ des annähernd bogenförmig verlaufenden hinteren Längsteiles 2. Dadurch ist die Gewähr gegeben, dass der Kreuzungsbereich K der Verlängerungen 5 und 6 ausserhalb der Auflagefläche A des Fahrzeugreifens 7 liegt, also bereits im Bereich der Seitenwandung des Fahrzeugreifens 7. Dies bringt eine wesentliche Schonung der Gleitschutzvorrichtung mit sich, da ein Kreuzungsbereich bei Gleitschutzvorrichtungen direkt im Bereich der Lauffläche eines Fahrzeugreifens zu relativ raschen Abnützungen führen würde.

Anhand der Fig. 2 bis 7 soll nun eine Montage einer erfindungsgemässen Gleitschutzvorrichtung nach Fig. 1 erläutert werden. Durch die Ausbildung des hinteren Längsteiles 2 in Form eines Bügels kann die Gleitschutzvorrichtung in einfacher Weise von vorne über einen Fahrzeugreifen 7 gehoben werden. Der hintere Längsteil 2 wird sodann an die hintere Seite des Fahrzeugreifens 7 gebracht, wobei die Verlängerungen 5 frei nach unten hängen. Es erfolgt nun ein Einhängen einer dieser hinteren Verlängerungen 5 am gegenüberliegenden abgewandten Ende der vorderen Verlängerung 6 des Längsteiles 1. Sodann erfolgt auch noch das Einhängen der anderen Verlängerung 5 an der entsprechend gegenüberliegenden Seite. Allein schon durch das stramme Einhängen ist eine ausreichende Befestigung der Gleitschutzvorrichtung gewährleistet. Es ist möglich, zusätzlich ein Sicherungselement 8 anzuordnen, welches im Bereich der eingehängten Verlängerungen 5, 6 einsetzbar ist. Ein solches Sicherungselement kann beispielsweise als Zug- oder Druckelement ausgeführt werden.

Aus der Beschreibung ist ersichtlich, dass eine sehr einfache Montage allein von der Vorderseite des Fahrzeugreifens aus möglich ist, ohne dass es komplizierter und konstruktiv aufwendiger Teile bedarf.

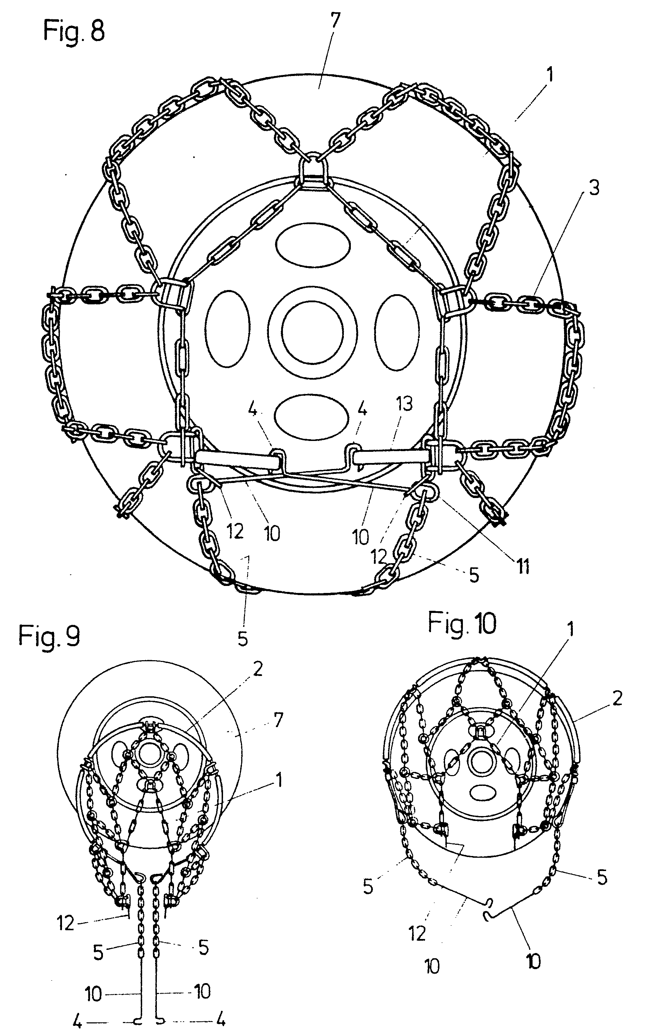

Fig. 8 zeigt ein anderes Ausführungsbeispiel einer erfindungsgemässen Gleitschutzvorrichtung, wobei sich hier die beiden Verlängerungen 5 an der dem Fahrzeug zugewendeten hinteren Seite des Fahrzeugreifens 7 kreuzen und ferner eine besondere Verbindungs- und Verschlusseinrichtung vorgesehen ist.

Es ist bereits erwähnt worden, dass im montagefertigen Zustand gesehen der Radius des einen Längsteiles gegenüber dem Radius des anderen Längsteiles verschieden ist. Es darf hier festgehalten werden, dass selbstverständlich nur symbolisch von einem Radius gesprochen werden kann, zumal zwischen festen Punkten eingespannten Ketten immer gerade Abschnitt bilden und somit eher ein Mehreck darstellen als eine Kreisbogenform. Es kann aber trotzdem ein Vergleich der «Radien» durchgeführt werden. Bei der Ausführung nach den Fig. 8 bis 15 ist der Radius des bei auf den Reifen 7 angelegter Gleitschutzvorrichtung vorderen Längsteiles kleiner als der Radius des hinteren Längsteiles. Es erfolgt daher in fertig montiertem Zustand ein Kreuzen der Verlängerungen 5 auf der dem Fahrzeug zugewendeten Seitenwand des Fahrzeugreifens 7. Bei einer solchen Ausgestaltung ist es daher möglich, dass der hintere Längsteil 2, welcher auch bei dieser Ausführung zweckmässig als Bügel ausgebildet wird, fast umfangsgeschlossen verlaufen kann, also einen besonderen Halt bietet. Es darf hier im besonderen auf die Darstellung in Fig. 9 verwiesen werden. In Fig. 8 wurde der Übersichtlichkeit halber der hintere Längsteil 2 nicht dargestellt.

Zur Verbindung des hinteren Längsteiles 2 mit dem vorderen Längsteil 1 sind hier wiederum Verlängerungen 5 vorgesehen, welche jedoch an ihren freien Enden nicht nur einen Haken 4 tragen, sondern eine besondere Ausbildung aufweisen. Am freien Ende dieser Verlängerungen 5 sind hier als stabförmige Spannhebel 10 ausgebildete Teile vorgesehen, welche an ihrem freien Ende als Haken 4 ausgeführt sind. Diese Spannhebel 10 sind mit der als Kette ausgebildeten Verlängerung 5 jeweils über ein kettengliedähnliches Ende 11 verbunden.

Die Spannhebel 10 werden in Ösen 12 eingeführt, welche an den Enden des vorderen Längsteiles 1 angeordnet sind. Diese Ösen 12 können beispielsweise auch als normale Kettenglieder ausgebildet sein. In die am freien Ende der Spannhebel 10 angeordneten Haken 4 werden federnde bzw. elastische Spannvorrichtungen 13 eingehängt, die mit dem gegenüberliegenden Ende des Längsteiles 1 verbunden sind. Durch die grosse Hebelwirkung der Spannhebel 10 müssen die Spannvorrichtungen 13 in der in Fig. 8 dargestellten fertig montierten Stellung der Gleitschutzvorrichtung parktisch keine Kräfte mehr aufbringen, so dass eine sicher montierte Gleitschutzvorrichtung gegeben ist.

Die Montage einer derartigen Anordnung ist besonders einfach, wie nachstehend noch anhand des in den Fig. 9 bis 15 dargestellten Montageablaufes erläutert wird.

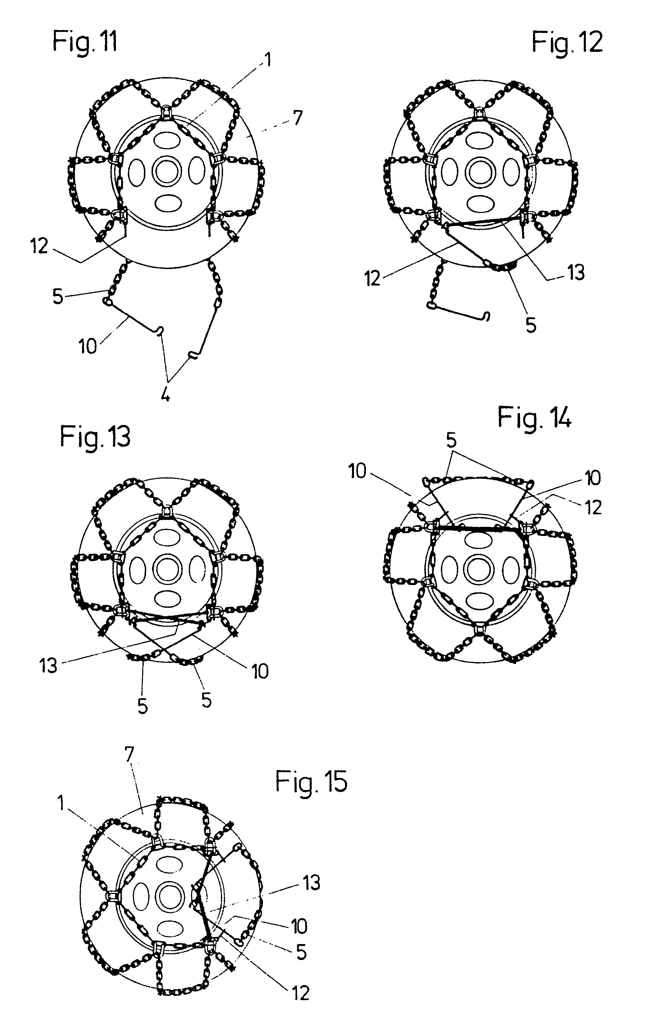

Mittels des bügelartigen hinteren Längsteiles 2 wird die Gleitschutzvorrichtung über den Fahrzeugreifen 7 gehoben und auf diesem angelegt. Es wird dabei darauf geachtet, dass die Verlängerungen 5 mit den Spannhebeln 10 nach vorne weisen. Diese Stellung ist etwa der Fig. 10 zu entnehmen. Aus Fig. 11 ist jener Montagezustand ersichtlich, bei welchem die Gleitschutzvorrichtung zur Gänze von oben her auf dem Fahrzeugreifen 7 aufgesetzt ist. Es wird nun eine Verlängerung 5 mit dem Spannhebel 10 erfasst, wobei vorerst der Haken 4 am freien Ende des Spannhebels 10 durch eine Öse 12 geführt wird, wobei durch entsprechendes Spannen von der Vorderseite her die elastische Spannvorrichtung 13, welche beispielsweise als Gummifeder ausgebildet sein kann, in den Haken 4 eingehängt wird. Es erfolgt also vorerst ein Sichern des eingehängten freien Endes des Spannhebels 10 (Fig. 12). Daraufhin wird auch gemäss Fig. 13 die zweite Verlängerung 5 mit dem entsprechenden Spannhebel 10 erfasst, wobei der Haken 4 durch die Öse 12 eingeführt wird und es erfolgt dann wiederum ein Einhängen der an den gegenüberliegenden Ende des Längsteiles 1 befestigten, elastischen Spannvorrichtung 13. Es ist ersichtlich, dass sich in einem solchen Montagezustand die Gleitschutzvorrichtung in einem noch relativ losen Zustand befindet. Die Montage ist nun an sich abgeschlossen, da das endgültige Zurechtlegen der Gleitschutzvorrichtung und somit das Spannen automatisch von selbst bereits nach ein oder zwei Umdrehungen des Fahrzeugreifens erfolgt. Es ist dies den Fig. 14 und 15 zu entnehmen. Wenn sich also der Fahrzeugreifen dreht, gelangt der ursprünglich unten liegende Bereich der Gleitschutzvorrichtung nach oben und ist daher unbelastet, so dass die elastischen Spannvorrichtungen 13 die Spannhebel 10 noch weiter durch die Ösen 12 hineinziehen können. Bei einem weiteren Verdrehen wird der Hebel immer weiter hineingezogen, so dass dann nach dem letzten Einziehvorgang, wenn also der Teil 11 des Spannhebels 10 an der Öse 12 zur Anlage kommt, die endgültige Montagestellung erreicht ist. In dieser Stellung haben die Spannvorrichtungen 13 nurmehr eine geringe Spannkraft, wobei aber keine besondere Spannkraft mehr erforderlich ist, da nur noch die Spannhebel 10 in dieser Lage zu sichern sind. Diese Endstellung ist der Fig. 8 zu entnehmen.

Als weitere Massnahme zur Sicherung des Spannhebels 10 in der in Fig. 8 dargestellten fertig montierten Lage, kann an den Teil 11 des Spannhebels 10 eine sickenförmige Abbiegung anschliessen, so dass der Spannhebel 10 praktisch in das die Öse 12 bildende Kettenglied einrasten kann.

Es ist aus den vorstehenden Ausführungen ersichtlich, dass gerade die Ausgestaltung nach Fig. 8 eine besonders einfache und sichere Montage einer Gleitschutzvorrichtung auf einem Fahrzeugreifen mit sich bringt.

Im Rahmen der Ansprüche sind noch andere Ausführungsvarianten möglich; wesentlich ist jedoch immer, dass die beiden Längsteile 1 und 2 an ihren Enden praktisch kreuzweise miteinander verbindbar sind.

**Patentansprüche**

1. Gleitschutzvorrichtung für Fahrzeugreifen mit zwei mit Abstand annähernd parallel zueinander verlaufenden, jeweils an den Reifenseitenwänden anliegenden Längsteilen (1, 2) aus Ketten, Seilen, Bügeln od.dgl. und mehreren mit Abstand aufeinanderfolgenden, die Laufflächen des Reifens überspannenden Querteilen (3), insbesondere Querketten, deren Enden an den beiden Längsteilen befestigt sind, sowie mit Verbindungsteilen (5) zur Fixierung bzw. Verspannung der Gleitschutzvorrichtung auf dem Fahrzeugreifen, dadurch gekennzeichnet, dass beide Längsteile (1, 2), wie an sich bekannt, von annähernd bogen- oder U-förmigen Ketten-, Seil-, Bügelabschnitten od.dgl. mit frei liegenden Enden gebildet sind und dass zumindest einer der beiden Längsteile (1, 2) in an sich bekannter Weise an seinen freien Enden Verlängerungen (5, 6) aufweist, und dass das freie Ende dieser Verlängerungen (5, 6) in das jeweils abgewandte freie Ende des annähernd parallel dazu verlaufenden bogen- oder U-förmigen Längsteiles (1, 2) einhängbar ist.

2. Gleitschutzvorrichtung nach Anspruch 1, dadurch gekennzeichnet, dass an allen vier freien Enden der beiden bogen- oder U-förmigen Längsteile (1, 2) Verlängerungen (5, 6) angeordnet sind, und dass bei auf den Reifen angelegter Gleitschutzvorrichtung die an dem Fahrzeug zugewendeten hinteren Längsteil vorgesehenen Verlängerungen (5) wesentlich länger ausgebildet sind als die Verlängerungen (6) des vorne liegenden Längsteiles (1).

3. Gleitschutzvorrichtung nach den Ansprüchen 1 und 2, dadurch gekennzeichnet, dass an den Verlängerungen (5, 6) wenigstens eines Längsteiles (1, 2) in an sich bekannter Weise als Haken (4) ausgebildete Fortsätze vorgesehen sind.

4. Gleitschutzvorrichtung nach den Ansprüchen 1 bis 3, dadurch gekennzeichnet, dass bei auf den Reifen angelegter Gleitschutzvorrichtung der Radius ($R_V$) des annähernd bogenförmig verlaufenden vorderen Längsteiles (1) gegenüber dem Radius ($R_R$) des annähernd bogenförmig verlaufenden hinteren Längsteiles (2) unterschiedlich gross ist, so dass der Kreuzungsbereich (K) der Verlängerungen (5, 6) ausserhalb der Auflagefläche (A) des Fahrzeugreifens (7) liegt.

5. Gleitschutzvorrichtung nach den Ansprüchen 1 bis 4, dadurch gekennzeichnet, dass bei auf den Reifen angelegter Gleitschutzvorrichtung der hintere Längsteil (2) als annähernd U-förmiger Bügel mit an seinen freien Enden befestigten Verlängerungen (5) in Form von Ketten ausgebildet ist und der vordere, bogen- oder U-förmige Längsteil (1) sowie die vorzugsweise an seinen freien Enden angeordneten Verlängerungen (6) als Kette ausgebildet sind.

6. Gleitschutzvorrichtung nach den Ansprüchen 1 bis 4, dadurch gekennzeichnet, dass das freie Ende der Verlängerungen (5) als stabförmiger Spannhebel (10) mit am freien Ende in an sich bekannter Weise ausgebildeten Haken (4) ausgeführt ist.

7. Gleitschutzvorrichtung nach Anspruch 6, dadurch gekennzeichnet, dass die hakenseitigen freien Enden der stabförmigen Spannhebel (10) jeweils an einem freien Ende eines Längsteiles (1, 2) bzw. der Verlängerungen (5, 6) in eine Öse (12) einführbar und mittels einer federnden bzw. elastischen Spannvorrichtung (13) in dieser Einhängestellung festlegbar sind.

**Claims**

1. Anti-skid device for vehicle tyres, with two spaced longitudinal parts (1, 2), extending roughly parallel to each other, in each case in contact with the side walls of the tyres, made of chains, cables straps or the like and several transverse parts (3) crossing the treads of the tyres at intervals, particularly transverse chains, whose ends are secured to the two longitudinal parts, and with connecting parts (5) to fix or brace the anti-skid device on the vehicle tyre, characterized in that both longitudinal parts (1, 2), as known per se, are constituted of roughly curved or U-shaped chain, cable and strap sections or the like, with their ends free, and in that at least one of the two longitudinal parts (1, 2) has extension pieces (5, 6) at its free ends in a way known per se and in that the free end of these extension pieces (5, 6) can be hocked to the free end, which in each case is facing away, of the curved or U-shaped longitudinal part (1, 2) extending approximately parallel thereto.

2. Anti-skid device according to Claim 1, characterized in that extension pieces are arranged at all four free ends of the two curved or U-shaped longitudinal parts (1, 2) and that, when the anti-skid device is in position on the tyres, the extension pieces provided on the rear longitudinal part facing the vehicle are designed to be considerably longer than the extension pieces (6) on the longitudinal part (1) at the front.

3. Anti-skid device according to Claims 1 and 2, characterized in that on the extension pieces (5, 6) of at least one of the longitudinal parts (1, 2), prolongations in hook form (4), in a way known per se, are provided.

4. Anti-skid device according to Claims 1 to 3, characterized in that, when the anti-skid device is in position on the tyres, the radius ($R_V$) of the roughly curved front longitudinal part (1), varies in size compared with the radius ($R_R$) of the roughly curved longitudinal part (2), so that the area of intersection (K) of the extension pieces (5, 6) lies outside the contact surface (A) of the vehicle tyre (7).

5. Anti-skid device according to Claims 1 to 4, characterized in that, when the anti-skid device is in position on the tyres, the rear longitudinal part (2) is designed as a roughly U-shaped strap with extension pieces (5) in chain form attached to its free ends, and the front curved or U-shaped longitudinal part (1) and the extension pieces (6) which are preferably arranged at its free ends, are designed as a chain.

6. Anti-skid device according to claims 1 to 4, characterized in that the free end of the extensions (5) is constructed as a rod-shaped tension lever (10) with hooks (4), designed in a way known per se, on the free end.

7. Anti-skid device according to Claim 6, characterized in that the hooked free ends of the rod-shaped tension lever (10), can in each case be inserted into an eyelet (12) on a free end of a longitudinal part (1, 2) or of the extension pieces (5, 6) and can be secured in this hooked position by means of a flexible or elastic clamping device (13).

**Revendications**

1. Dispositif antidérapant pour pneus d'automobiles, comportant deux pièces longitudinales (1, 2) disposées approximativement parallèlement l'une à l'autre et à distance l'une de l'autre et appuyant chacune sur une des parois latérales du pneu, constituées de chaînes, de câbles, d'étriers ou éléments analogues et de plusieurs pièces transversales (3) recouvrant la surface de roulement du pneu et se succédant à intervalles et, en particulier, des chaînes transversales dont les extrémités sont fixées aux deux pièces longitudinales, ainsi que des pièces de jonction (5) pour fixer ou tendre le dispositif antidérapant sur le pneu d'automobile, caractérisé en ce que les deux pièces longitudinales (1, 2) sont constituées, d'une manière connue en soi, de sections de chaînes, de câbles ou d'étriers approximativement en forme d'arc ou de «U» ou éléments analogues ayant des extrémités libres, et en ce qu'au moins l'une des deux pièces longitudinales (1, 2) présente, d'une manière connue en soi, des prolongements (5, 6) à ces extrémités libres et en ce que l'extrémité libre de ces prolongements (5, 6) peut être accrochée à l'extrémité libre opposée de la pièce longitudinale (1, 2) en forme d'arc ou de «U», disposée à peu près parallèlement à celle-ci.

2. Dispositif antidérapant selon la revendication 1, caractérisé en ce que des prolongements (5, 6) sont disposés aux quatre extrémités libres des deux pièces longitudinales (1, 2) en forme d'arc ou de «U» et en ce que les prolongements (5) prévus sur la pièce longitudinale postérieure tournée vers le véhicule, lorsque le dispositif antidérapant est monté sur le pneu, sont sensiblement plus longues que les prolongements (6) de la pièce longitudinale (1) en position antérieure.

3. Dispositif antidérapant selon la revendication 1 et 2, caractérisé en ce que des saillies disposées en forme de crochets (4) d'une manière connue en soi, sont prévues sur les prolongements (5, 6) d'au moins une pièce longitudinale (1, 2).

4. Dispositif antidérapant selon les revendications 1 à 3, caractérisé en ce que le rayon (R$_V$) de la pièce longitudinale (1) antérieure disposée approximativement en forme d'arc est différent, lorsque le dispositif antidérapant est monté sur le pneu, du rayon (R$_R$) de la pièce longitudinale (2) postérieure disposée approximativement en forme d'arc, si bien que la zone de croisement (K) des prolongements (5, 6) est située en dehors de la surface de roulement (A) du pneu du véhicule (7).

5. Dispositif antidérapant selon les revendications 1 à 4, caractérisé en ce que la pièce longitudinale postérieure (2) est constituée d'un étrier approximativement en forme de «U», avec des prolongements (5) fixés à ses extrémités libres et constitués par des chaînes lorsque le dispositif antidérapant est monté sur le pneu et que la pièce longitudinale (1) antérieure en forme de «U» ou d'arc, ainsi que les prolongements (6) disposés, de préférence, à ses extrémités libres, sont constitués par des chaînes.

6. Dispositif antidérapant selon les revendications 1 à 4, caractérisé en ce que l'extrémité libre des prolongements (5) est constituée par un levier de serrage (10) en forme de barre avec, à son extrémité libre, un crochet (4) réalisé d'une manière connue en soi.

7. Dispositif antidérapant selon la revendication 6, caractérisé en ce que les extrémités libres du levier de serrage (10) en forme de barre du côté du crochet peuvent être insérées chacune dans un œillet (12) à l'une des extrémités libres d'une pièce longitudinale (1, 2) ou de ses prolongements (5, 6) et peuvent y être fixées dans cette position d'accrochage au moyen d'un dispositif de serrage (13) élastique ou à ressort.

0 125 676

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15